# EUROPÄISCHE PATENTSCHRIFT

(11) **EP 2 246 668 B1**
(45) Veröffentlichungstag und Bekanntmachung des Hinweises auf die Patenterteilung: **05.11.2014**
(21) Anmeldenummer: 09161965.0
(22) Anmeldetag: 04.06.2009
(51) Int. Cl.: G01D 5/14

(54) **Elektrischer Stellantrieb**
Electric actuator
Actionneur électrique

(30) Priorität: 30.04.2009 DE 202009006227 U
(43) Veröffentlichungstag der Anmeldung: 03.11.2010
(73) Patentinhaber: Dr. Fritz Faulhaber GmbH & Co. KG, 71101 Schönaich (DE)
(72) Erfinder: Wallner, Herbert, 71101, Schönaich (DE); Ernst, Alexander, 71144, Steinenbronn (DE); Haug, Jens, 72135, Dettenhausen (DE); Freyhardt, Sabine, 72229, Rohrdorf (DE); Wössner, Stefan, 70597, Stuttgart (DE)
(74) Vertreter: Patentanwälte Dr. Solf & Zapf

(56) Entgegenhaltungen:
- EP-A- 1 275 938
- FR-A- 2 886 448
- US-A1- 2002 190 709

## Beschreibung

Die vorliegende Erfindung betrifft gemäß dem Oberbegriff des Anspruchs 1 einen elektrischen Stellantrieb für beliebige mechanisch zu verstellende Einrichtungen, mit einem elektrischen Antriebsmotor und einer über einen Dreh-Stellbereich von mehr als 360° einstellbaren Abtriebswelle.

Solche Stellantriebe können für beliebige Antriebsfunktionen eingesetzt werden, beispielsweise für Maschinenteile, wie Roboterarme, Klappen (beispielsweise auch in Flugzeugen) und dergleichen. Dabei soll das jeweilige Teil in beliebige, eindeutig definierte und erfassbare Stellungen bewegt werden. Eine Steuerung benötigt daher ein eindeutiges Rückmeldesignal zur Erfassung der jeweiligen Position.

Das Dokument FR 2 886 448 A1 - vgl. auch unter anderem die korrespondierende Veröffentlichung DE 10 2006 023 844 B4 - beschreibt keinen Stellantrieb mit einem elektrischen Antriebsmotor, sondern nur ein "Potentiometer" zur Erfassung der Drehstellung einer Welle. Dazu ist die Welle über ein Getriebe mit zwei Detektionseinheiten verbunden, wobei eine Ausgabeeinheit basierend auf den jeweiligen Signalen der zwei Detektionseinheiten ein elektrische Signal erzeugt, welches einer Drehbewegungsgröße der Welle proportional ist.

Der vorliegenden Erfindung liegt die Aufgabe zu Grunde, einen Stellantrieb der genannten Art zu schaffen, der mit kompakter Bauform universell für bestimmte Anwendungen konzipiert und eingesetzt werden kann.

Erfindungsgemäß wird dies durch die Merkmale des Anspruchs 1 gelöst. Vorteilhafte Ausgestaltungen und bestimmte Alternativen sind in den weiteren Ansprüchen enthalten.

Gemäß einem ersten Erfindungsaspekt weist der Stellantrieb ein integriertes berührungsloses Sensor-Winkelmesssystem zur Ermittlung und Rückmeldung der jeweiligen Drehstellung der Abtriebswelle auf, wobei das integrierte Winkelmesssystem so ausgebildet ist, dass es ein Ausgangssignal erzeugt, welches demjenigen eines üblichen mehrgängigen Potentiometersystems in dessen Eigenschaften weitgehend nachgebildet, d.h. (emuliert) ist. Dies bedeutet, dass das Ausgangssignal auch die bei einem herkömmlichen mehrgängigen Potentiometersystem üblicherweise vorhandenen Fehler mit nachbildet. Dadurch kann ein Anwender des erfindungsgemäßen Stellantriebs seine bisherige, anwenderseitig vorhandene Steuerung unverändert weiter nutzen, indem die vorhandene Steuerung Maßnahmen zur Fehlerkompensation des Potentiometersignals aufweist. Erfindungsgemäß werden somit praktisch auch künstlich Fehler oder Eigenschaften in dem Ausgangssignal des Winkelmesssystems nachgebildet, damit der Stellantrieb weiter in der vorhandenen Steuerung eingesetzt werden kann, ohne die Steuerung ändern zu müssen.

Besondere Eigenschaften des emulierten Ausgangssignals sind beispielsweise:
- Simulation einer Kennlinie eines belasteten Spannungsteilers, d. h. eine "künstliche" Verzerrung der eigentlich linearen Kennlinie,
- Simulation einer Rutschkupplung, d. h. das Ausgangssignal wird nach Überschreiten bzw. Verlassen des Arbeitsbereiches konstant gehalten, statt wieder auf Null oder einen anderen Anfangswert zu springen,
- Nachbildung eines ratiometrischen Ausgangs, d. h. eines zur angelegten Spannung proportionalen Signals.

Weiterhin kann der erfindungsgemäße Stellantrieb sehr kompakt ausgebildet sein, indem das Sensor-Winkelmesssystem gemeinsam mit dem Antriebsmotor, der Abtriebswelle und bevorzugt einem Arbeitsgetriebe in einem gemeinsamen Gehäuse integriert angeordnet ist.

Weitere Einzelheiten, besondere Ausgestaltungsmerkmale sowie Ausführungsvarianten ergeben sich auch aus der nachfolgenden Beschreibung.

Anhand von in der Zeichnung veranschaulichten, bevorzugten Ausführungsbeispielen und Ausführungsvarianten soll die Erfindung im Folgenden genauer erläutert werden. Dabei zeigen:
- Fig. 1: eine Perspektivansicht eines erfindungsgemäßen Stellantriebs mit geschlossenem Gehäuse,
- Fig. 2: einen Axialschnitt des Stellantriebs,
- Fig. 3: einen vergrößerten Axialschnitt in einer gegenüber Fig. 2 versetzten Schnittebene und nur in einem (oberen) Teilbereich des Stellantriebs mit einer ersten Ausführungsform des Winkelmesssystems,
- Fig. 4: eine Perspektivansicht auf die wesentlichen Elemente des Winkelmesssystems in der Ausführung gemäß Fig. 3,
- Fig. 5: eine Perspektivansicht ähnlich Fig. 4 in einer zweiten Ausführungsform des Winkelmesssystems und
- Fig. 6: eine perspektivische Explosionsansicht des Winkelmesssystems mit seinen wesentlichen Bestandteilen.

In den verschiedenen Figuren der Zeichnung sind gleiche Teile stets mit den gleichen Bezugszeichen versehen.

Ein erfindungsgemäßer Stellantrieb 1 weist einen elektrischen Antriebsmotor 2 und eine Abtriebswelle 4 auf, die über einen Dreh-Stellbereich von mehr als 360° einstellbar ist. Zur Ermittlung und Rückmeldung der jeweiligen Drehstellung der Abtriebswelle 4 weist der Stellantrieb 1 erfindungsgemäß ein integriertes berührungsloses Sensor-Winkelmesssystem 6 auf.

Gemäß einem besonderen Erfindungsaspekt ist das Winkelmesssystem 6 derart ausgelegt, dass es ein Ausgangssignal erzeugt, welches einem üblichen mehrgängigen Potentiometersystem in dessen Eigenschaften weitgehend nachgebildet (emuliert) ist.

In bevorzugter Ausgestaltung ist das Winkelmesssystem 6 als Encodersystem mit einem von der Abtriebswelle 4 angetriebenen Encodergetriebe 8 ausgebildet. Die Abtriebswelle 4 ist dazu mit mindestens zwei rotierend gelagerten Geberrädern 10, 12 gekoppelt, deren Drehstellungen jeweils einzeln eindeutig als Absolutwerte sensorisch erfasst werden, wobei die Geberräder 10, 12 derart mit einem bestimmten Übersetzungsverhältnis gekoppelt sind, dass anhand der erfassten Drehstellungen der Geberräder 10, 12 die Drehstellung der Abtriebswelle 4 über deren gesamten Stellbereich von mehr als 360° hinweg eindeutig bestimmbar ist.

Dazu weist jedes Geberrad 10, 12 ein Magnetelement 14 auf, und jedem Geberrad 10, 12 und seinem zugehörigen Magnetelement 14 ist ein Sensor 16, 18 mit zugehöriger Auswerteeinrichtung 20 zur Erfassung der Drehstellung des jeweiligen Geberrades 10, 12 anhand seines Magnetelementes 14 zugeordnet. Die bevorzugt elektronische, insbesondere einen Mikro-Controller (µ-Controller) aufweisende Auswerteeinrichtung 20 bestimmt dann auch die Drehstellung der Abtriebswelle 4 anhand der jeweils erfassten Kombination der Drehstellungen der einzelnen Geberräder 10, 12. Bevorzugt sind die Magnetelemente 14 bezüglich der Drehachse des jeweiligen Geberrades 10, 12 diametral magnetisiert, und als Sensoren 16, 18 werden Hall-Sensoren eingesetzt.

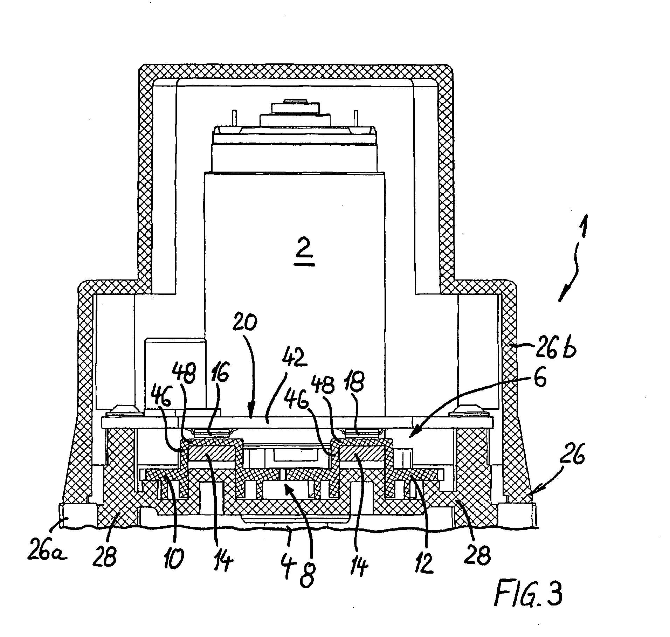

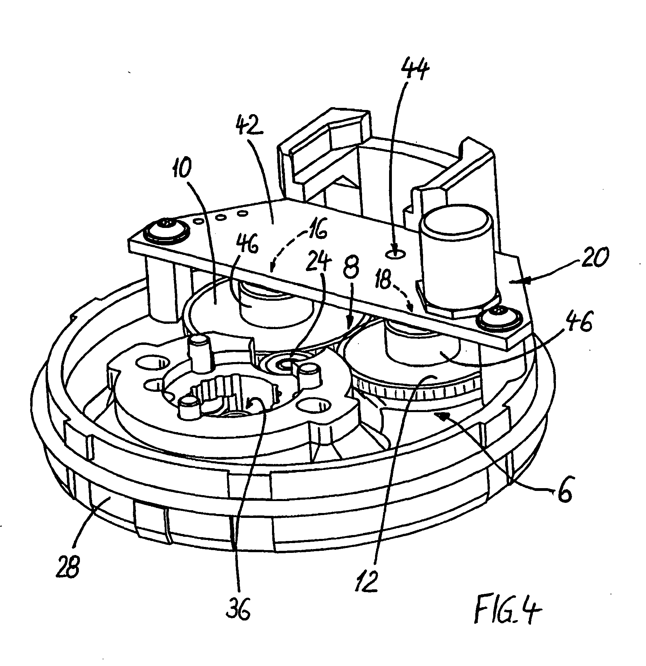

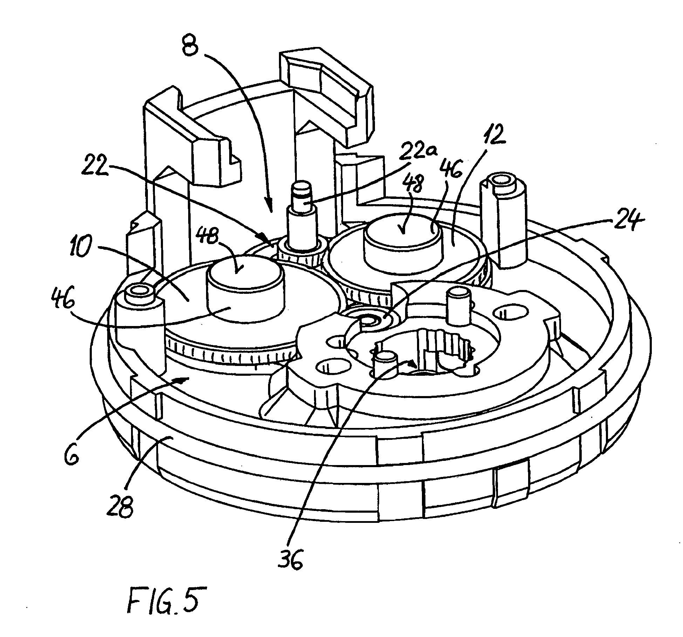

Vorzugsweise sind die Elemente des Encodergetriebes 8 in Reihe hintereinander angeordnet, wobei nur eines der Geberräder, im dargestellten Beispiel das Geberrad 10, unmittelbar mit der Abtriebswelle 4 gekoppelt ist. Die Geberräder 10, 12 können miteinander entweder unmittelbar (Fig. 3 und 4) oder aber mittelbar über einen Zwischentrieb 22 (Fig. 5) gekoppelt sein. In dem letztgenannten Fall der Figur 5 mit dem Zwischentrieb 22 ist das Encodergetriebe 8 mit den Geberrädern 10, 12 bevorzugt in zwei axial versetzten Ebenen aufgebaut.

In weiterer bevorzugter Ausgestaltung ist das Encodergetriebe 8 als Zahnradgetriebe ausgebildet. Hierdurch wird eine drehmomentschlüssige Verbindung ohne Schlupf zwischen den Getriebelementen gewährleistet. Das Übersetzungsverhältnis (bzw. das Untersetzungsverhältnis) der Geberräder 10, 12 wird hierbei durch die Zähnezahlen der in Eingriff stehenden Elemente des Encodergetriebes 8 bestimmt. Bevorzugt weisen die Geberräder 10, 12 relativ zueinander eine resultierende Zähnezahl-Differenz größer/gleich zwei auf, wobei die aus dem Gesamt-Übersetzungsverhältnis resultierenden Zähnezahlen der Geberräder 10, 12 vorzugsweise geradzahlig und jedenfalls nicht teilerfremd sind.

Bei der ersten Ausführungsform gemäß Fig. 3 und 4 mit direktem Eingriff der beiden Geberräder 10, 12 kann deren Zähnezahlverhältnis "erstes Geberrad 10 : zweites Geberrad 12" beispielsweise 68 : 60 betragen. Natürlich sind auch andere geeignete Verhältnisse möglich, die die oben genannten Bedingungen erfüllen.

Bei der zweiten Ausführungsform gemäß Fig. 5 mit Zwischentrieb 22 können beispielsweise folgende Verhältnisse vorgesehen sein:

| | |
|---|---|
| Ein mit der Abtriebswelle 4 verbundenes Ritzel 24: | 20 Zähne |
| Das mit dem Ritzel 24 gekoppelte erste Geberrad 10: | 68 Zähne |
| Ein erstes, mit dem ersten Geberrad 10 | |
| gekoppeltes Zahnrad des Zwischentriebes 22: | 20 Zähne |
| Ein zweites Zahnrad des Zwischentriebes 22: | 36 Zähne |
| Das mit dem zweiten Zahnrad des Zwischentriebes 22 | |
| gekoppelte zweite Geberrad 12: | 34 Zähne |

Es sei bemerkt, dass diese genannten Verhältnisse rein beispielhaft zu verstehen sind, und dass natürlich auch jede andere Auslegung im Bereich der Erfindung möglich ist.

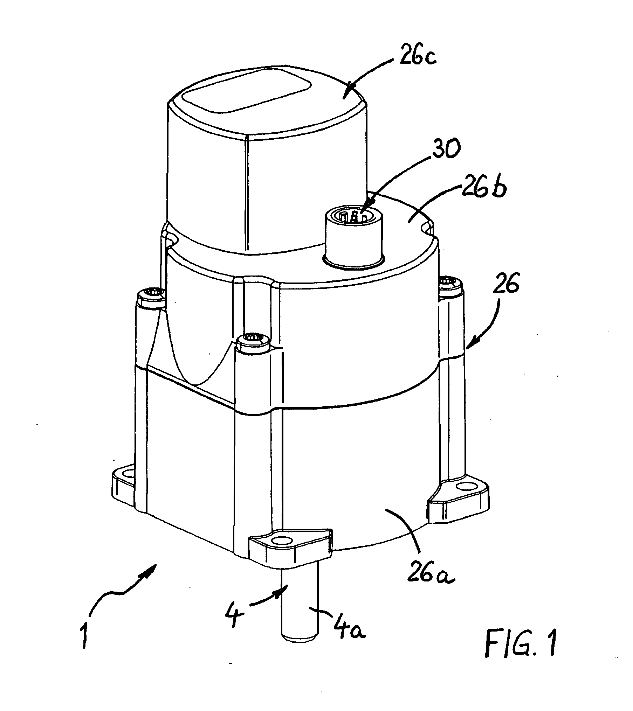

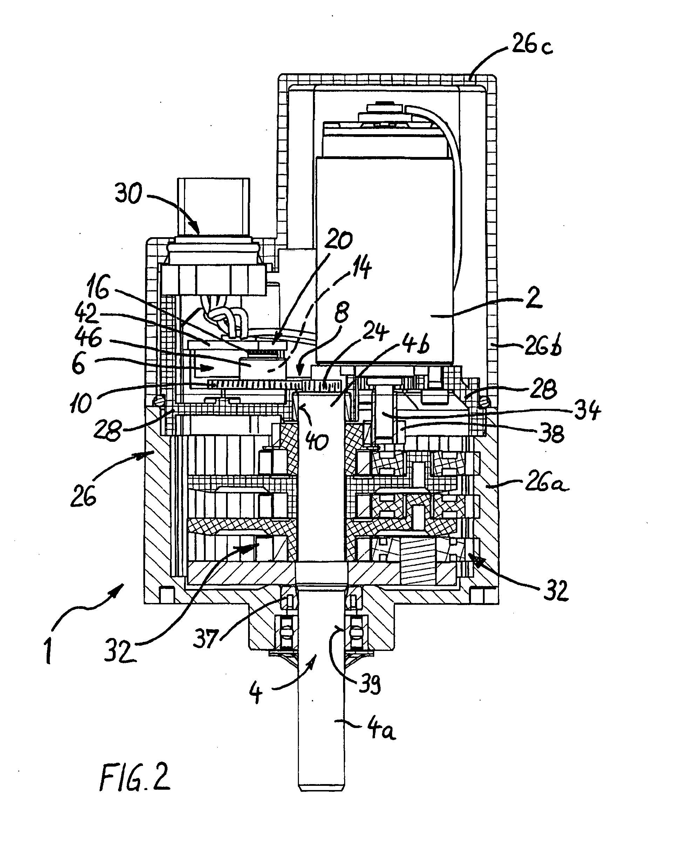

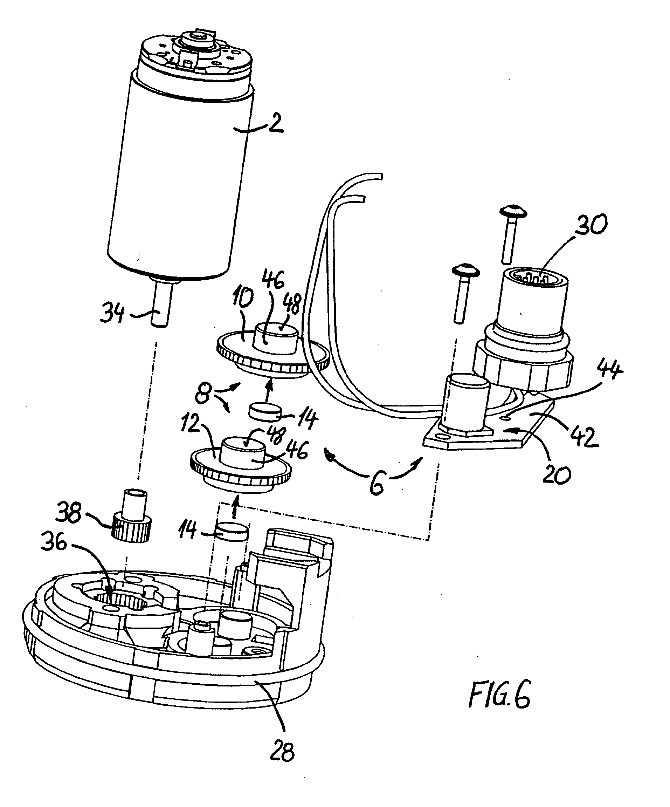

Gemäß einem weiteren Erfindungsaspekt sind alle Bestandteile des Stellantriebs 1 in einem gemeinsamen kompakten und bevorzugt dicht gekapselten Gehäuse 26 untergebracht. Gemäß Fig. 1 und 2 ist das Gehäuse 26 zumindest angenähert zylindrisch, topfartig ausgebildet. Hierbei ist das Gehäuse 26 etwa mittig in zwei kappenartige Gehäuseteile 26a, 26b quergeteilt. Dies bedeutet, dass eine Teilungsebene quer, insbesondere senkrecht zur Achse der Abtriebswelle 4 verläuft. Innerhalb des Gehäuses 26 etwa im Verbindungsbereich der beiden Gehäuseteile 26a, b ist ein im Wesentlichen plattenförmiges Basisteil 28 angeordnet (siehe dazu insbesondere auch Fig. 3 bis 6). Das zweite, "obere" Gehäuseteil 26b kann eine haubenartige Erweiterung 26c zur bereichsweisen Aufnahme des Antriebsmotors 2 aufweisen. Außerdem ist im Bereich des zweiten Gehäuseteils 26b eine Durchführung 30 für nicht dargestellte elektrische Verbindungsleitungen vorgesehen. Vorzugsweise kann die Durchführung 30 als Steckkupplung zum lösbaren Steckanschluss der Verbindungsleitungen ausgebildet sein.

In weiterer bevorzugter Ausgestaltung treibt der Antriebsmotor 2 die Abtriebswelle 4 mittelbar über ein Arbeitsgetriebe 32 an. Dieses Arbeitsgetriebe 32 ist innerhalb des ersten Gehäuseteils 26a angeordnet und bevorzugt als mehrstufiges Planetengetriebe ausgebildet; siehe Fig. 2.

Das Encodergetriebe 8 mit den Geberrädern 10, 12, die Sensoren 16, 18 mit der Auswerteeinrichtung 20 sowie auch der Antriebsmotor 2 sind an dem Basisteil 28 auf dessen von dem Arbeitsgetriebe 32 weg in das zweite Gehäuseteil 26b weisenden Seite montiert. Eine Welle 34 des Antriebsmotors 2 durchgreift eine Öffnung 36 des Basisteils 28 und ist über ein Antriebsritzel 38 mit dem Arbeitsgetriebe 32 gekoppelt. Zudem bildet das Basisteil 28 auch Lagerstellen für alle drehbeweglichen Teile des Encodergetriebes 8.

Die Abtriebswelle 4 weist ein aus dem Gehäuse 26 über eine Wellendichtung 37 durch eine entsprechende Lageröffnung 39 des ersten Gehäuseteils 26a nach außen geführtes Anschlussende 4a zur Verbindung mit der jeweiligen zu verstellenden Einrichtung (nicht dargestellt) sowie eine gegenüberliegende, eine Lageröffnung 40 des Basisteils 28 durchgreifende und über das Ritzel 24 mit dem Encodergetriebe 8 gekoppelte Verlängerung 4b auf (Fig. 2).

In weiterer vorteilhafter Ausgestaltung sind die Sensoren 16, 18 zusammen mit der Auswerteeinrichtung 20 des Encodersystems auf einer gemeinsamen Leiterplatte 42 angeordnet. Wie am besten in Fig. 4 zu erkennen ist, ist diese Leiterplatte 42 parallel beabstandet derart an dem Basisteil 28 befestigt, dass sie die Geberräder 10, 12 brückenartig überdeckt, wobei jeder Sensor 16, 18 dem zugehörigen Geberrad 10, 12 direkt axial benachbart ist. Die Leiterplatte 42 weist in besonders vorteilhafter Ausgestaltung eine insbesondere oberflächig metallisierte Lochöffnung 44 in Form einer so genannten "Durchkontaktierung" auf, die eine Drehlagerstelle für einen Lagerzapfen 22a (Fig. 5) des optionalen Zwischentriebs 22 des Encodergetriebes 8 in der Ausführung gemäß Fig. 5 bildet. Gemäß Fig. 5 ist somit der Zwischentrieb 22 einendig in einer Lageröffnung des Basisteils 28 und anderendig mit dem Lagerzapfen 22a in der Lochöffnung 44 der Leiterplatte 42 gelagert (vgl. Fig. 4).

Zur Unterbringung des jeweiligen Magnetelementes 14 weist jedes Geberrad 10, 12 auf seiner der Leiterplatte 42 axial zugewandten Seite eine topfartige Ausbuchtung 46 auf, wobei diese Ausbuchtung 46 eine Bodenwandung 48 (Fig. 3) aufweist, die mit ihrer Dicke einen Abstand zwischen dem Magnetelement 14 und dem zugehörigen Sensor 16, 18 definiert. Die nur einseitig an dem Basisteil 28 drehbar gelagerten Geberräder 10, 12 sind somit anderseitig durch die Sensoren 16, 18 in axialer Richtung fixiert. Hierdurch wird vorteilhafterweise eine Lageunabhängigkeit des erfindungsgemäßen Stellantriebs 1 erreicht, indem die Geberräder 10, 12 mit geringer Reibung an den Sensoren 16, 18 anliegen.

In weiterer vorteilhafter Ausgestaltung sind die Elemente des Encodergetriebes 8 bei der bevorzugten Ausführung als Zahnradgetriebe mit einem vom üblichen Standard abweichenden Zahnflankenwinkel kleiner 20° ausgebildet. Diese Maßnahme dient zur Minimierung des Verdrehflankenspiels zwischen den einzelnen Getriebeelementen.

Der Antriebsmotor 2 und das Encodergetriebe 8 sind an dem Basisteil 28 nebeneinander in etwa diametral gegenüberliegenden Flächenbereichen montiert. Hierbei definieren die Elemente des Encodergetriebes 8 - insbesondere in der Ausführung mit Zwischentrieb 22 - mit ihren Rotationsachsen etwa eine Kreisbahn, die zur Achse der Abtriebswelle 4 nicht konzentrisch verläuft. Dies trägt mit dazu bei, dass der erfindungsmäße Stellantrieb 1 insbesondere bezüglich des Winkelmesssystems 6 und des Encodergetriebes 8 modular ausgebildet sein kann. So können zur Anpassung an verschiedene Anwendungen aus einer Mehrzahl von vorhandenen Komponenten die jeweils geeigneten ausgewählt und bei der Montage des Stellantriebs 1 baukastenartig eingesetzt werden.

Im Folgenden sollen noch besondere Erfindungsaspekte hinsichtlich der Mess- und Auswerteelektronik und des Ausgangssignals erläutert werden.

Das Ausgangssignal ist entsprechend der Potentiometer-Emulation ratiometrisch. Dazu wird der ratiometrische Ausgang eines Potis im Mikro-Controller der Auswerteeinrichtung 20 entsprechend nachgebildet. Dazu wird die Versorgungsspannung beispielsweise mit 12 bis 13 bit-Auflösung eingelesen und der Ausgabewert entsprechend korrigiert.

Weiterhin ist vorgesehen, dass das Ausgangssignal eine belastete Potentiometer-Kennlinie nachbildet. Dies kann im Mikro-Controller mittels einer Korrektur-Tabelle erfolgen.

Zudem kann mit Vorteil das Verhalten einer Rutschkupplung nachgebildet werden, indem das Ausgangssignal bei Überschreitung bestimmter Positionsgrenzen konstant gehalten, d. h. nicht weiter verändert wird.

Ferner kann eine weitgehende Temperaturunabhängigkeit erreicht werden, indem das Ausgangssignal zurückgelesen und über eine Regelung angepasst wird. Vorzugsweise wird das Ausgangssignal hoch aufgelöst eingelesen (12 bis 13 bit). Der zurückgelesene Wert wird mit dem auszugebenden Wert verglichen und dieser gegebenenfalls korrigiert.

Weiterhin kann mit Vorteil die Auflösung eines eingesetzten A/D-Wandlers zum Einlesen des Ausgangssignals und der Versorgungsspannung durch Oversampling erhöht werden, um einen kostengünstigen A/D-Wandler einsetzen zu können.

Eine geringe Stromaufnahme des Winkelmesssystems 6 kann durch zeitweise Deaktivierung der Sensoren 16, 18 und/oder durch Stromfilterung erreicht werden. Die - gegenüber z. B. optischen Encodern - vergleichsweise geringe Stromaufnahme wird hauptsächlich dadurch realisiert, dass die auf Hall-Sensor-Basis arbeitenden Sensoren zwischen dem Auslesen der Winkelinformationen in einen "Low-Power-Modus" versetzt werden. Ein Filter (RC-Filter) glättet den Strom und verhindert dadurch Spitzenströme.

Weiterhin kann sich das Ausgangssignal mit Vorteil aus einem gefilterten "PWM-Signal" und der Ausgabe eines D/A-Wandlers zusammensetzen. Somit wird kein externer D/A-Wandler benötigt, indem ein analoges Ausgangssignal aus dem z. B. 10-bit-D/A-Wandler und einer z. B. 8-bit-PWM des Mikro-Controllers zusammengesetzt ist. Dabei erfolgt eine Kalibrierung derart, dass sich die beiden Signale stufenlos zu z. B. 18-bit zusammensetzen.

Es sei noch bemerkt, dass die Erfindung nicht auf die im Anspruch 1 enthaltene Merkmalskombination beschränkt ist. Vielmehr sind alle einzelnen Merkmale, wie sie in der Gesamt-Anmeldung offenbart sind, einzeln und in beliebigen Kombinationen anwendbar. Zudem liegt es ebenfalls im Rahmen der Erfindung, den Stellantrieb in der beschriebenen Gesamt-Konzeption mit einer digitalen Schnittstelle zur Übergabe des - dann unmittelbar digitalen - Encoder-Ausgangssignals auszustatten. Es entfallen dann die oben erwähnten A/D- bzw. D/A-Wandler.

## Patentansprüche

1. Elektrischer Stellantrieb (1) für mechanisch zu verstellende Einrichtungen, mit einem elektrischen Antriebsmotor (2) und einer über einen Dreh-Stellbereich von mehr als 360° einstellbaren Abtriebswelle (4),
**gekennzeichnet durch** ein integriertes berührungsloses Sensor-Winkelmesssystem (6) zur Ermittlung und Rückmeldung der jeweiligen Drehstellung der Abtriebswelle (4), wobei das Sensor-Winkelmesssystem (6) als Encodersystem mit einem von der Abtriebswelle (4) angetriebenen Encodergetriebe (8) ausgebildet ist und die Abtriebswelle (4) mit mindestens zwei rotierenden Geberrädem (10,12) gekoppelt ist, deren Drehstellungen jeweils einzeln eindeutig als Absolutwerte sensorisch erfasst werden, wobei die Geberräder (10, 12) derart mit einem bestimmten Über- oder Untersetzungsverhältnis gekoppelt sind, dass anhand der jeweils erfassten Kombination der Drehstellungen der Geberräder (10, 12) die Drehstellung der Abtriebswelle (4) bestimmbar ist, indem die erfassten Drehstellungen in einer elektronischen Auswerteeinrichtung (20) so verarbeitet werden, dass das Winkelmesssystem (6) ein Ausgangssignal erzeugt, welches einem üblichen mehrgängigen Potentiometersystem so nachgebildet ist, dass das Ausgangssignal ratiometrisch ist und eine belastete Potentiometer-Kennlinie nachbildet.

2. Stellantrieb nach Anspruch 1,
**dadurch gekennzeichnet, dass** jedes Geberrad (10, 12) ein Magnetelement (14) aufweist, und jedem Geberrad (10, 12) ein Sensor (1C, 18) mit zugehöriger Auswerteeinrichtung (20) zur Erfassung der Drehstellung des jeweiligen Geberrades (10,12) anhand des Magnetelementes (14) zugeordnet ist, wobei die Auswerteeinrichtung (20) auch die Drehstellung der Abtriebswelle (4) anhand der Drehstellungen der Geberräder (10, 12) bestimmt.

3. Stellantrieb nach Anspruch 1 oder 2,
**dadurch gekennzeichnet, dass** nur eines (10) der Geberräder (10, 12) unmittelbar mit der Abtriebswelle (4) gekoppelt ist, wobei die Geberräder (10, 12) miteinander unmittelbar oder mittelbar über einen Zwischentrieb (22) gekoppelt sind.

4. Stellantrieb nach einem der Ansprüche 1 bis 3,
**dadurch gekennzeichnet, dass** das Encodergetriebe (8) als Zahnradgetriebe ausgebildet ist, wobei das Übersetzungsverhältnis der Geberräder (10, 12) durch die Zähnezahlen der Elemente des Encodergetriebes (8) bestimmt wird.

5. Stellantrieb nach Anspruch 4,
**dadurch gekenntzeichnet, dass** die Geberräder (10,12) eine resultierende Zähnezahl -Differenz größer/gleich zwei aufweisen, wobei die aus dem Gesamt-Übersetzungsverhältnis resultierenden Zähnezahlen der Geberräder (10, 12) nicht teilerfremd sind.

6. Stellantrieb nach einem der Ansprüche 1 bis 5,
**dadurch gekennzeichnet, dass** der Antriebsmotor (2) die Abtriebswelle (4) über ein Arbeitsgetriebe (32) antreibt, wobei das Arbeitsgetriebe (32) bevorzugt als mehrstufiges Planetengetriebe ausgebildet ist.

7. Stellantrieb nach einem der Ansprüche 1 bis 6,
**gekennzeichnet durch** ein kompaktes Gehäuse (26), das etwa mittig in zwei kappenartige Gehäuseteile (26a, 26b) quergeteilt ist, wobei innerhalb des Gehäuses (26) im Verbindungsbereich der Gehäuseteile (26a, 26b) ein im Wesentlichen plattenförmiges Basisteil (28) angeordnet ist, wobei das Arbeitsgetriebe (32) innerhalb des ersten Gehäuseteils (26a) angeordnet ist, während das Winkelmesssystem (6) und der Antriebsmotor (2) innerhalb des zweiten Gehäuseteils (26b) untergebracht sind.

8. Stellantrieb nach Anspruch 7,
**dadurch gekennzeichnet, dass** das Encodergetriebe (8) mit den Geberrädern (10, 12), den Sensoren (16,18) und der Auswerteeinrichtung (20) sowie auch der Antriebsmotor (2) an dem Basisteil (28) auf dessen von dem Arbeitsgetriebe (32) wegweisenden Seite montiert sind, wobei eine Welle (34) des Antriebsmotors (2) eine Öffnung (36) des Basisteils (28) durchgreift und über ein Antriebsritzel (38) mit dem Arbeitsgetriebe (32) gekoppelt ist.

9. Stellantrieb nach Anspruch 7 oder 8,
**dadurch gekennzeichnet, dass** dieAbtriebswelle(4)einaus dem Gehäuse (26) geführtes Anschlussende (4a) zur Verbindung mit der jeweiligen zu verstellenden Einrichtung sowie eine gegenüberliegende, eine Öffnung (40) des Basisteils (28) durchgreifende und - insbesondere über ein Ritzel (24) - mit dem Encodergetriebe (8) gekoppelte Verlängerung (4b) aufweist,

10. Stellantrieb nach einem der Ansprüche 7 bis 9,
**dadurch gekennzeichnet, dass** die Sensoren (16,18) und die Auswerteeinrichtung (20) des Encodersystems auf einer gemeinsamen Leiterplatte (42) angeordnet sind, wobei die Leiterplatte (42) parallel beabstandet derart an dem Basisteil (28) befestigt ist, dass jeder Sensor (18, 18) dem zugehörigen Geberrad (10, 12) direkt axial benachbart ist.

11. Stellantrieb nach Anspruch 10,
**dadurch gekennzeichnet, dass** dieLeiterplatte(42)eine insbesondere oberflächig metallisierte Lochöffnung (44) als Drehlagerstelle für den optionalen Zwischentrieb (22) des Encodergetriebes (8) aufweist.

12. Stellantrieb nach Anspruch 10 oder 11,
**dadurch gekennzeichnet, dass** jedes Geberrad (10,12) auf seiner der Leiterplatte (42) axial zugewandten Seite eine topfartige Ausbuchtung (46) zur Aufnahme des Magnetelementes (1a) aufweist, wobei die Ausbuchtung (46) eine Bodenwandung (48) aufweist, die mit ihrer Dicke einen Abstand zwischen dem Magnetelement (14) und dem zugehörigen Sensor (16,18) definiert.

13. Stellantrieb nach einem der Ansprüche 2 bis 12,
**dadurch gekennzeichnet, dass** die Geberräder (10,12) einseitig gelagert sind und anderseitig durch die Sensoren (16, 18) in axialer Richtung fixiert sind.

14. Stellantrieb nach einem der Ansprüche 1 bis 13,
**dadurch gekennzeichnet, dass** die Elemente des Encodergetriebes (8) bei einer Ausführung als Zahnradgetriebe mit einem Zahnflankenwinkel kleiner 20° ausgebildet sind,

15. Stellantrieb nach einem der Ansprüche 1 bis 14,
**dadurch gekennzeichnet, dass** der Antriebsmotor (2) und das Encodergetriebe (8) nebeneinander in etwa diametral gegenüberliegenden Bereichen montiert sind, wobei die Elemente des Encodergetriebes (8) mit ihren Rotationsachsen etwa eine Kreisbahn definieren, die zur Achse der Abtriebswelle (4) nicht konzentrisch verläuft.

16. Stellantrieb nach einem der Ansprüche 1 bis 15,
**gekennzeichnet durch** eine modulare Ausgestaltung insbesondere des Winkelmesssystems (6).

17. Stellantrieb nach einem der Ansprüche 1 bis 16,
**dadurch gekennzeichnet, dass** das Verhalten einer Rutschkupplung emuliert wird, indem das Ausgangssignal nicht weiter verändert wird, wenn bestimmte Positionsgrenzen überschritten sind.

18. Stellantrieb nach einem der Ansprüche 1 bis 17, **dadurch gekennzeichnet, dass** eine weitgehende Temperaturunabhängigkeit erzeugt wird, indem das Ausgangssignal zurückgelesen und über eine Regelung angepasst wird.

19. Stellantrieb nach einem der Ansprüche 1 bis 18, **dadurch gekennzeichnet, dass** Oversampling zum Einlesen des Ausgangssignals und der Versorgungsspannung eingesetzt wird, wobei bevorzugt ein A/D-Wandler mit niedriger Auflösung vorgesehen ist.

20. Stellantrieb nach einem der Ansprüche 1 bis 19,
**dadurch gekennzeichnet, dass** sich das Ausgangssignal aus einem gefilterten PWM-Signal und der Ausgabe eines D/A-Wandlers zusammensetzt.

21. Stellantrieb nach einem der Ansprüche 1 bis 20,
**dadurch gekennzeichnet, dass** die Stromaufnahme des Winkelmesssystems (6) durch zeitweise Deaktivierung der Sensoren (16, 18) und/oder Strom-Filterung minimiert wird.

22. Stellantrieb nach einem der Ansprüche 1 bis 21,
**gekennzeichnet durch** eine digitale Schnittstelle zur Übergabe des Ausgangssignals des Winkelmesssystems (6).

## Claims

1. Electrical actuating drive (1) for devices to be adjusted mechanically, having an electrical drive motor (2) and an output-drive shaft (4) which can be adjusted over a rotation actuating range of more than 360°,
**characterized by**
an integrated contactless sensor angle measurement system (6) for determining and feeding back the respective rotation position of the output-drive shaft (4), wherein the sensor angle measurement system (6) is in the form of an encoder system having an encoder transmission (8) which is driven by the output-drive shaft (4) and the output-drive shaft (4) is coupled to at least two rotating transmitter wheels (10, 12), whose rotation positions are each detected individually and uniquely as absolute values by sensors, wherein the transmitter wheels (10, 12) are coupled with a specific step-up or step-down ratio such that the rotation position of the output-drive shaft (4) can be determined on the basis of the respectively detected combination of the rotation positions of the transmitter wheels (10, 12) by the detected rotation positions being processed in an electronic evaluation device (20) such that the angle measurement system (6) produces an output signal which simulates a conventional multiple potentiometer system such that the output signal is ratiometric and simulates a loaded potentiometer characteristic.

2. Actuating drive according to Claim 1, **characterized in that** each transmitter wheel (10, 12) has a magnet element (14), and each transmitter wheel (10, 12) is associated with a sensor (16, 18) with an associated evaluation device (20) for detecting the rotation position of the respective transmitter wheel (10, 12) on the basis of the magnet element (14), wherein the evaluation device (20) also determines the rotation position of the output-drive shaft (4) on the basis of the rotation positions of the transmitter wheels (10, 12).

3. Actuating drive according to Claim 1 or 2, **characterized in that** only one (10) of the transmitter wheels (10, 12) is directly coupled to the output-drive shaft (4), wherein the transmitter wheels (10, 12) are directly or indirectly coupled to one another via an intermediate drive (22).

4. Actuating drive according to one of Claims 1 to 3, **characterized in that** the encoder transmission (8) is in the form of a gearwheel transmission, wherein the step-up ratio of the transmitter wheels (10, 12) is determined by the number of teeth on the elements of the encoder transmission (8).

5. Actuating drive according to Claim 4,
**characterized in that**
the transmitter wheels (10, 12) have a resultant difference in the number of teeth of greater than or equal to two, wherein the number of teeth on the transmitter wheels (10, 12) resulting from the overall step-up ratio are not relatively prime.

6. Actuating drive according to one of Claims 1 to 5,
**characterized in that**
the drive motor (2) drives the output-drive shaft (4) via a working transmission (32), wherein the working transmission (32) is preferably in the form of a multistage epicyclic transmission.

7. Actuating drive in particular according to one of Claims 1 to 6, **characterized by**
a compact housing (26) which is split transversally approximately centrally into two cap-like housing parts (26a, 26b), wherein a base part (28), which is essentially in the form of a plate, is arranged within the housing (26) in the connection area of the housing parts (26a, 26b), wherein the working transmission (32) is arranged within the first housing part (26a), while the angle measurement system (6) and the drive motor (2) are accommodated within the second housing part (26b).

8. Actuating drive according to Claim 7,
**characterized in that**
the encoder transmission (8) together with the transmitter wheels (10, 12), the sensors (16, 18) and the evaluation device (20) as well as the drive motor (2) are mounted on the base part (28), on its side facing away from the working transmission (32), wherein a shaft (34) of the drive motor (2) passes through an opening (36) in the base part (28), and is coupled to the working transmission (32) via a drive pinion (38).

9. Actuating drive according to Claim 7 or 8,
**characterized in that**
the output-drive shaft (4) has a connecting end (4a), which is passed out of the housing (26), for connection to the respective device to be adjusted, as well as an opposite extension (4b), which passes through an opening (40) in the base part (28) and is coupled to the encoder transmission (8), in particular via a pinion (24).

10. Actuating drive according to one of Claims 7 to 9,
**characterized in that**
the sensors (16, 18) and the evaluation device (20) of the encoder system are arranged on a common printed circuit board (42), wherein the printed circuit board (42) is attached to the base part (28) parallel to and at a distance from it such that each sensor (16, 18) is directly axially adjacent to the associated transmitter wheel (10, 12).

11. Actuating drive according to Claim 10,
**characterized in that**
the printed circuit board (42) has a hole opening (44), whose surface is in particular metalized, as a rotating bearing point for the optional intermediate drive (22) of the encoder transmission (8).

12. Actuating drive according to Claim 10 or 11,
**characterized in that**
each transmitter wheel (10, 12) has a pot-like outward bulge (46) for holding the magnet element (14) on its side which axially faces the printed circuit board (42), wherein the outward bulge (46) has a bottom wall (48) whose thickness defines a distance between the magnet element (14) and the associated sensor (16, 18).

13. Actuating drive according to one of Claims 2 to 12,
**characterized in that**
the transmitter wheels (10, 12) are mounted on one side and are fixed on the other side by the sensors (16, 18) in the axial direction.

14. Actuating drive according to one of Claims 1 to 13,
**characterized in that**
the elements of the encoder transmission (8) are, in one embodiment, in the form of a gearwheel transmission with a tooth flank angle of less than 20°.

15. Actuating drive according to one of Claims 1 to 14,
**characterized in that**
the drive motor (2) and the encoder transmission (8) are mounted alongside one another in approximately diametrically opposite areas, wherein the rotation axes of the elements of the encoder transmission (8) approximately define a circular path which does not run concentrically with respect to the axis of the output-drive shaft (4).

16. Actuating drive according to one of Claims 1 to 15,
**characterized by**
a modular configuration in particular of the angle measurement system (6).

17. Actuating drive according to one of Claims 1 to 16,
**characterized in that**
the behavior of a slipping clutch is emulated **in that** the output signal does not change any further when specific position limits are overshot.

18. Actuating drive according to one of Claims 1 to 17,
**characterized in that**
a high degree of temperature independence is produced **in that** the output signal is read back and is adapted via a closed-loop control system.

19. Actuating drive according to one of Claims 1 to 18,
**characterized in that**
oversampling is used for reading in the output signal and the supply voltage, wherein a low-resolution A/D converter is preferably provided.

20. Actuating drive according to one of Claims 1 to 19,
**characterized in that**
the output signal comprises a filtered PWM signal and the output of a D/A converter.

21. Actuating drive according to one of Claims 1 to 20,
**characterized in that**
the current drawn by the angle measurement system (6) is minimized by deactivating the sensors (16, 18) and/or by current filtering at times.

22. Actuating drive according to one of Claims 1 to 21,
**characterized by**
a digital interface for transferring the output signal from the angle measurement system (6).

## Revendications

1. Actionneur électrique (1) pour des dispositifs à régler mécaniquement, comprenant un moteur de commande électrique (2) et un arbre de sortie (4) réglable sur une plage de rotation de plus de 360°,
**caractérisé par** un système de mesure angulaire par capteurs (6) sans contact intégré pour la détermination et le rétrosignal de la position de rotation respective de l'arbre de sortie (4), le système de mesure angulaire par capteurs (6) étant réalisé sous forme de système d'encodeur avec un engrenage d'encodeur (8) entraîné par l'arbre de sortie (4), et l'arbre de sortie (4) étant couplé à au moins deux roues de transmetteur rotatives (10, 12), dont les positions de rotation individuelles sont respectivement détectées par capteurs, de façon univoque, sous forme de valeurs absolues, les roues de transmetteur (10, 12) étant couplées avec un rapport de multiplication ou de démultiplication défini de telle sorte que la position de rotation de l'arbre de sortie (4) est déterminable à l'aide de la combinaison respectivement détectée des positions de rotation des roues de transmetteur (10, 12), les positions de rotation détectées étant traitées dans un dispositif d'évaluation électronique (20) de sorte que le système de mesure angulaire (6) génère un signal de sortie, qui est la reproduction d'un système potentiométrique courant à filetage multiple, de sorte que le signal de sortie est ratiométrique et simule une caractéristique de potentiomètre en charge.

2. Actionneur selon la revendication 1,
**caractérisé en ce que** chaque roue de transmetteur (10, 12) présente un élément magnétique (14), et qu'un capteur (16, 18) avec un dispositif d'évaluation correspondant (20) est associé à chaque roue de transmetteur (10, 12) pour détecter la position de rotation de la roue de transmetteur respective (10, 12) à l'aide de l'élément magnétique (14), le dispositif d'évaluation (20) déterminant également la position de rotation de l'arbre de sortie (4) à l'aide des positions de rotation des roues de transmetteur (10, 12).

3. Actionneur selon l'une des revendications 1 et 2,
**caractérisé en ce que** seule l'une (10) des roues de transmetteur (10, 12) est couplée directement à l'arbre de sortie (4), les roues de transmetteur (10, 12) étant couplées directement ou indirectement entre elles par une transmission intermédiaire (22).

4. Actionneur selon l'une des revendications 1 à 3,
**caractérisé en ce que** l'engrenage d'encodeur (8) est réalisé sous forme de rouage, le rapport d'engrenage des roues de transmetteur (10, 12) étant défini par les nombres de dents des éléments de l'engrenage d'encodeur (8).

5. Actionneur selon la revendication 4,
**caractérisé en ce que** les roues de transmetteur (10, 12) présentent une différence de nombre de dents résultante supérieure/égale à deux, les nombres de dents résultant du rapport d'engrenage total des roues de transmetteur (10, 12) n'étant pas premiers entre eux.

6. Actionneur selon l'une des revendications 1 à 5,
**caractérisé en ce que** le moteur de commande (2) entraîne l'arbre de sortie (4) par l'intermédiaire d'un engrenage de travail (32), l'engrenage de travail (32) étant réalisé de préférence sous forme d'engrenage planétaire multiétagé.

7. Actionneur selon l'une des revendications 1 à 6,
**caractérisé par** un carter compact (26) partagé transver-salement, à peu près au centre, en deux parties de carter (26a, 26b) en forme de capot, une partie de base (28) essentiellement en forme de plaque étant disposée à l'intérieur du carter (26) dans la zone d'assemblage des parties de carter (26a, 26b), l'engrenage de travail (32) étant disposé à l'intérieur de la première partie de carter (26a), tandis que le système de mesure angulaire (6) et le moteur de commande (2) sont logés à l'intérieur de la seconde partie de carter (26b).

8. Actionneur selon la revendication 7,
**caractérisé en ce que** l'engrenage d'encodeur (8) avec les roues de transmetteur (10, 12), les capteurs (16, 18) et le dispositif d'évaluation (20), ainsi que le moteur de commande (2), sont montés sur la partie de base (28), sur le côté de cette dernière opposé à l'engrenage de travail (32), un arbre (34) du moteur de commande (2) traversant une ouverture (36) de la partie de base (28) et étant couplé à l'engrenage de travail (32) par l'intermédiaire d'un pignon menant (38).

9. Actionneur selon l'une des revendications 7 et 8,
**caractérisé en ce que** l'arbre de sortie (4) présente une extrémité de raccordement (4a), guidée hors du carter (26), pour la jonction avec le dispositif respectif à régler, ainsi qu'un prolongement (4b) en vis-à-vis, qui traverse une ouverture (40) de la partie de base (28) et est couplé - en particulier par l'intermédiaire d'un pignon (24) - à l'engrenage d'encodeur (8).

10. Actionneur selon l'une des revendications 7 à 9,
**caractérisé en ce que** les capteurs (16, 18) et le dispositif d'évaluation (20) du système d'encodeur sont disposés sur une plaquette commune (42), la plaquette (42) étant fixée parallèlement et à distance sur la partie de base (28) de telle sorte que chaque capteur (16, 18) est voisin directement dans la direction axiale de la roue de transmetteur (10, 12) correspondante.

11. Actionneur selon la revendication 10,
**caractérisé en ce que** la plaquette (42) présente une perforation (44), en particulier métallisée en surface, en tant que coussinet de pivotement pour la transmission intermédiaire optionnelle (22) de l'engrenage d'encodeur (8).

12. Actionneur selon l'une des revendications 10 et 11,
**caractérisé en ce que** chaque roue de transmetteur (10, 12) présente, sur son côté tourné dans la direction axiale vers la plaquette (42), un renflement (46) en forme de pot pour recevoir l'élément magnétique (14), le renflement (46) présentant une paroi de fond (48) qui définit par son épaisseur un écartement entre l'élément magnétique (14) et le capteur correspondant (16, 18).

13. Actionneur selon l'une des revendications 2 à 12,
**caractérisé en ce que** les roues de transmetteur (10, 12) sont logées d'un côté et sont fixées de l'autre côté par les capteurs (16, 18) dans la direction axiale.

14. Actionneur selon l'une des revendications 1 à 13,
**caractérisé en ce que** les éléments de l'engrenage d'encodeur (8) sont configurés, dans une réalisation sous forme de rouage, avec un angle de flanc de dent inférieur à 20°.

15. Actionneur selon l'une des revendications 1 à 14,
**caractérisé en ce que** le moteur de commande (2) et l'engrenage d'encodeur (8) sont montés en juxtaposition dans des zones opposées approximativement diamétralement, les éléments de l'engrenage d'encodeur (8) définissant par leurs axes de rotation approximativement une orbite, qui n'est pas concentrique par rapport à l'axe de l'arbre de sortie (4).

16. Actionneur selon l'une des revendications 1 à 15,
**caractérisé par** une configuration modulaire, en particulier du système de mesure angulaire (6).

17. Actionneur selon l'une des revendications 1 à 16,
**caractérisé en ce que** le comportement d'un limiteur de couple est émulé, le signal de sortie restant inchangé lorsque des limites de position définies sont dépassées par le haut.

18. Actionneur selon l'une des revendications 1 à 17,
**caractérisé en ce qu'**une large indépendance de la température est produite, le signal de sortie étant lu et adapté par l'intermédiaire d'une régulation.

19. Actionneur selon l'une des revendications 1 à 18,
**caractérisé en ce qu'**un sur-échantillonnage est utilisé pour la lecture du signal de sortie et de la tension d'alimentation, un convertisseur A/N à basse résolution étant prévu de préférence.

20. Actionneur selon l'une des revendications 1 à 19,
**caractérisé en ce que** le signal de sortie se compose d'un signal PWM filtré et de la sortie d'un convertisseur N/A.

21. Actionneur selon l'une des revendications 1 à 20,
**caractérisé en ce que** la consommation de courant du système de mesure angulaire (6) est minimisée par désactivation temporaire des capteurs (16, 18) et/ou filtrage de courant.

22. Actionneur selon l'une des revendications 1 à 21,
**caractérisé par** une interface numérique pour la transmission du signal de sortie du système de mesure angulaire (6).
